Europäisches Patentamt

European Patent Office

Office européen des brevets

(19)

(11) Veröffentlichungsnummer: **0 315 853 B1**

(12) **EUROPÄISCHE PATENTSCHRIFT**

(45) Veröffentlichungstag der Patentschrift: **15.01.92**

(51) Int. Cl.⁵: **G02B 23/14**

(21) Anmeldenummer: **88118079.8**

(22) Anmeldetag: **31.10.88**

(54) **Gewehrzielfernrohr mit erweitertem Verstellbereich.**

(30) Priorität: **07.11.87 DE 3737856**

(43) Veröffentlichungstag der Anmeldung:
**17.05.89 Patentblatt 89/20**

(45) Bekanntmachung des Hinweises auf die
Patenterteilung:
**15.01.92 Patentblatt 92/03**

(84) Benannte Vertragsstaaten:
**AT CH DE FR GB IT LI**

(56) Entgegenhaltungen:
**AU-B- 20 195**
**DE-A- 3 208 814**
**US-A- 4 389 791**

(73) Patentinhaber: **Firma Carl Zeiss**

**W-7920 Heidenheim (Brenz)(DE)**
(84) Benannte Vertragsstaaten:
**CH DE FR IT LI AT**

Patentinhaber: **CARL ZEISS-STIFTUNG HAN-
DELND ALS CARL ZEISS**

**W-7920 Heidenheim (Brenz)(DE)**
(84) Benannte Vertragsstaaten:
**GB**

(72) Erfinder: **Weyrauch, Adolf**
**Hegelstrasse 132**
**W-7080 Aalen(DE)**

**Beschreibung**

Die Erfindung betrifft ein Gewehrzielfernrohr nach dem Oberbegriff des Patentanspruchs 1.

Bei Gewehrzielfernrohren wird das anvisierte Ziel in der Objektivebene seitenverkehrt und auf dem Kopf stehend abgebildet. Ein optisches Umkehrsystem, das in einem rohrförmigen Gehäuse im Fernrohrtubus angeordnet ist, richtet das Bild auf und bildet es in der Okularebene ab, wo es mit dem Okular betrachtet wird. Zum Schätzen der Entfernung eines anvisierten Zieles ist bei Gewehrzielfernrohren bekannter Bauart in der Objektiv- oder Okularbildebene das Absehen (Strichplatte) montiert. Zur Erzielung einer variablen Vergrößerung werden die optischen Glieder des Umkehrsystems bekannter Gewehrzielfernrohre verschiebbar angeordnet, wobei der Angriffspunkt der Verstelleinrichtung in die Nähe der Objektivbildebene gelegt ist und der erforderliche Verschiebeweg sich aus dem Winkel der Ziellinienverlagerung multipliziert mit der Objektivbrennweite ergibt. Zur Veränderung der Ziellinie ist es außerdem bekannt, das Umkehrsystem kippbar zu lagern und den Drehpunkt der Kippung in die Okularbildebene zu verlegen, so wie in der DE-A-3 208 814 beschrieben, die dem oberbegriff entspricht.

Der Erfindung liegt die Aufgabe zugrunde, ein Gewehrzielfernrohr anzugeben, bei dem bei einem vorgegebenen Verschiebeweg des Umkehrsystems eine möglichst große Ziellinienverlagerung erreicht wird.

Diese Aufgabe wird mit einem Gewehrzielfernrohr nach dem kennzeichnenden Teil des Patentanspruchs 1 gelöst.

In einem vorteilhaften Ausführungsbeispiel der Erfindung ist zur kippbaren Lagerung des Hilfstubus dessen dem Objektiv zugewandtes Ende als monolithisches Federgelenk ausgebildet, das bei einer Kippung des Hilfstubus im Fernrohrtubus elastisch verformt wird.

Die mit der Erfindung erzielten Vorteile bestehen insbesondere darin, daß bei vorgegebenen Abmessungen des Zielfernrohres die Verstellung der Ziellinie gegenüber Zielfernrohren bekannter Ausführungsform deutlich vergrößert wird. So ist beispielsweise für eine vorgegebene Verstellung bei einem Gewehrzielfernrohr nach der Erfindung die Ziellinienverstellung um 50% größer als bei einem Gewehrzielfernrohr bekannter Bauart. Ein weiterer Vorteil der Erfindung besteht darin, daß bei erfindungsgemäßer Anordnung des Angriffspunktes für die Verstellung des Umkehrsystems die Ziellinienverlagerung unabhängig ist von einer Querverlagerung des Drehpunktes des kippbar gelagerten Umkehrsystems.

Ein Ausführungsbeispiel der Erfindung ist in der Zeichnung dargestellt und wird im folgenden näher beschrieben. Es zeigen

Fig. 1   einen Längsschnitt durch ein Gewehrzielfernrohr bekannter Bauart;

Fig. 2   einen Längsschnitt durch ein Ausführungsbeispiel der Erfindung;

Fig. 3   einen Längsschnitt durch ein weiteres Ausführungsbeispiel der Erfindung.

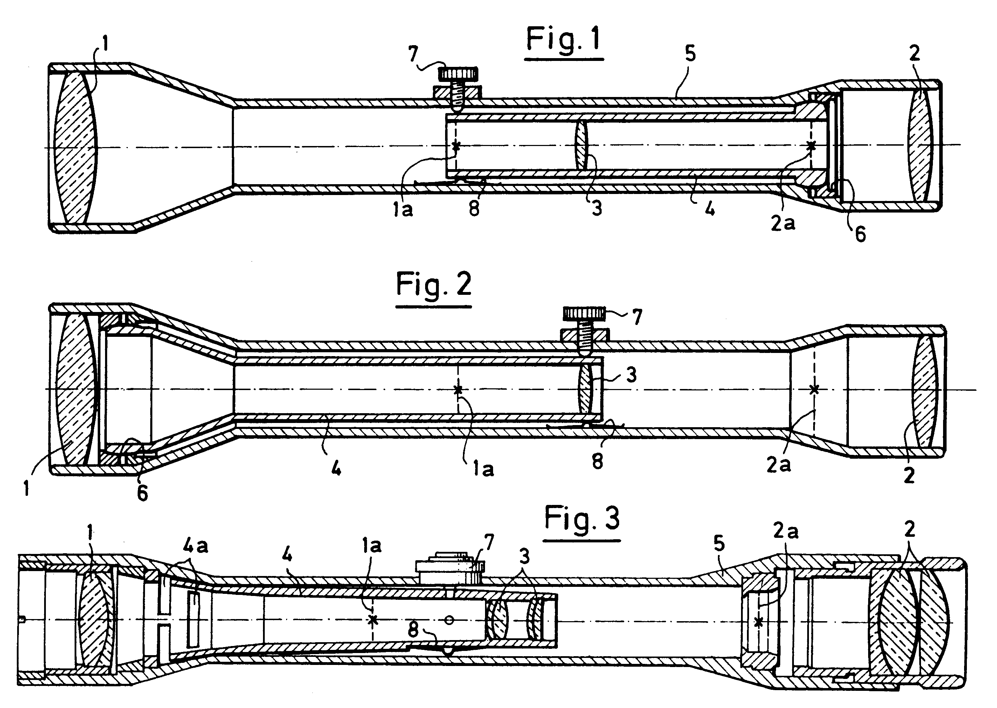

In dem in Fig. 1 dargestellten Gewehrzielfernrohr bekannter Bauart ist mit dem Bezugszeichen (1) das Objektiv bezeichnet, mit dem Bezugszeichen (2) das Okular und mit (3) das Umkehrsystem. Der einfachheithalber sind die optischen Systeme für Objektiv, Okular und Umkehrsystem jeweils nur mit einer Linse symbolisiert. Das Umkehrsystem (3) ist in einem Hilfstubus (4) montiert, der im Tubus (5) des Gewehrzielfernrohres kippbar gelagert ist. Die Lagerstelle ist mit (6) bezeichnet. Sie ist reibungsbehaftet. Das Absehen (Fadenkreuz) ist in der Objektivbildebene montiert, die mit (1a) bezeichnet ist. Die Okularbildebene ist mit (2a) bezeichnet. Mit (7) ist eine Einstellschraube und mit (8) eine Feder zur Kippung des Hilfstubus (4) im Tubus (5) bezeichnet.

In der Darstellung der Fig. 2 sind für gleiche Teile gleiche Bezeichnungen gewählt. Gemäß der Erfindung befindet sich die kippbare Lagerung (6) des Hilfstubus (4) zwischen dem Objektiv (1) und der Objektivbildebene (1a). Das Absehen ist in diesem Gewehrzielfernrohr in der Okularbildebene (2a) montiert.

In dem in Fig. 3 dargestellten Ausführungsbeispiel der Erfindung sind für funktionsgleiche Teile dieselben Bezeichnungen gewählt wie für das Ausführungsbeispiel nach Fig. 2. Die optischen Systeme für Okular, Objektiv und Umkehrsystem sind in ihrer tatsächlichen Form eingezeichnet und nicht mit symbolisierten Linsen wie im Ausführungsbeispiel nach Fig. 2. Die kippbare Lagerung des Hilfstubus (4) ist reibungsfrei durch ein monolithisches Federgelenk (4a) am Ende des Hilfstubus (4), das sich bei Kippung des Hilfstubus elastisch verformt. Das Absehen ist in der Okularbildebene 2a montiert. Der Angriffspunkt für die Verstellung des Umkehrsystems (3) liegt um einen Betrag S hinter der Objektivbildebene (1a), der durch die Ungleichung

$$\frac{L}{2(1-\beta)} \leq S \leq \frac{L}{1-\beta}$$

definiert ist, worin L den Abstand zwischen der Objektivbildebene (1a) und der Okularbildebene (2a) und $\beta$

die Vergrößerung des Umkehrsystems bedeutet. In diesem Fall ist die Ziellinienverlagerung unabhängig von einer Querverlagerung des Drehpunktes einer Kippung. Im gezeichneten Beispiel der Fig. 3 beträgt L - 96 mm, $\beta$ = -2 und S liegt im Bereich 16 mm $\leq$ S $\leq$ 32 mm.

**Patentansprüche**

1. Gewehrzielfernrohr mit einem in einem Tubus (5) angeordneten Objektiv (1), einem Okular (2) und einem kippbar gelagerten und verstellbaren Umkehrsystem (3), das in einem Hilfstubus (4) im Tubus (5) zwischen dem Objektiv (1) und dem Okular (2) angeordnet ist, dadurch gekennzeichnet, daß für den Hilfstubus (4) zwischen dem Objektiv (1) und der Objektivbildebene (1a) eine kippbare Lagerung (6) vorgesehen ist, daß das Absehen in der Okularbildebene (2a) angeordnet ist und daß der Angriffspunkt für die Verstellung des Umkehrsystems (3) um eine Strecke S hinter der Objektivbildebene (1a) angeordnet ist, die der Ungleichung

$$\frac{L}{2\,(1-\beta)} \leq S \leq \frac{L}{1-\beta}$$

gehorcht, in der mit L der Abstand zwischen der Objektivbildebene (1a) und der Okularbildebene (2a) und mit $\beta$ der Vergrößerungsmaßstab des Umkehrsystems (3) bezeichnet ist.

2. Gewehrzielfernrohr nach Anspruch 1, dadurch gekennzeichnet, daß zur kippbaren Lagerung des Hilfstubus (4) dessen dem Objektiv (1) zugewandtes Ende als Federgelenk (4a) ausgebildet ist.

**Claims**

1. Telescopic gun sight comprising a main tube (5), in which an objective (1), an eyepiece (2) and an inverting system (3) is mounted, said inverting system being arranged pivotable and displaceable in an auxiliary tube (4) which is mounted within said main tube and between said objective and said eyepiece, characterized in that for the auxiliary tube (4) a tiltable mount (6) is provided which is located between said objective (1) and an objective image plane (1a) that a reticle is mounted in the eyepiece image plane (2a) and that the point of action for displacement of said inverting system is arranged behind said objective image plane (1a) by an amount S which is defined by the expression

$$\frac{L}{2(1-\beta)} \leq S \leq \frac{L}{1-\beta}$$

where L is the distance between the objective image plane (1a) and the eyepiece image plane (2a), and $\beta$ is the magnification of the inverting system.

2. Telescopic gun sight as defined in claim 1 wherein for a tiltable mounting the portion of said auxiliary tube (4) adjacent said objective (1) is formed as a spring joint (4a).

**Revendications**

1. Lunette de visée pour fusil, comprenant un objectif (1) disposé dans un tube (5), un oculaire (2) et un dispositif redresseur d'image (3) monté basculant et réglable, qui est placé dans un tube auxiliaire (4) à l'intérieur du tube (5) de la lunette, entre l'objectif (1) et l'oculaire (2), caractérisée en ce qu'un montage basculant (6) est prévu pour le tube auxiliaire (4) entre l'objectif (1) et le plan d'image objectif (1a), que le réticule est disposé dans le plan d'image oculaire (2a) et que le point d'attaque pour le réglage du dispositif redresseur d'image. (3) est placé derrière le plan d'image objectif (1a), à une distance S qui répond à l'inéquation

$$\frac{L}{2\,(1-\beta)} \leqslant s \leqslant \frac{L}{1-\beta},$$

où L désigne la distance entre le plan d'image objectif (1a) et le plan d'image oculaire (2a) et $\beta$ désigne le grossissement du dispositif redresseur d'image (3).

2. Lunette de visée pour fusil selon la revendication 1, caractérisée en ce que, pour le montage basculant du tube auxiliaire (4), l'extrémité de ce tube dirigée vers l'objectif (1) est réalisée comme une articulation élastique (4a).

## Fig. 1

## Fig. 2

## Fig. 3

EP 0 315 853 B1